**Europäisches Patentamt**

**European Patent Office**

**Office européen des brevets**

(19)

(11) Veröffentlichungsnummer : **0 005 159 B1**

(12) **EUROPÄISCHE PATENTSCHRIFT**

(45) Veröffentlichungstag der Patentschrift : 08.07.81

(51) Int. Cl.³ : **F 16 J 15/34, F 04 D 29/12**

(21) Anmeldenummer : 79100806.3

(22) Anmeldetag : 16.03.79

(54) **Gleitringdichtung.**

(30) Priorität : 20.03.78 DE 2812133
20.03.78 DE 2812133

(43) Veröffentlichungstag der Anmeldung : 14.11.79 (Patentblatt 79/23)

(45) Bekanntmachung des Hinweises auf die Patenterteilung : 08.07.81 Patentblatt 81/27

(84) Benannte Vertragsstaaten : FR GB IT

(56) Entgegenhaltungen :
DE - A - 2 216 815
DE - A - 2 405 616
DE - B - 2 529 469
DE - U - 1 945 841
FR - A - 2 357 760
GB - A - 807 140
US - A - 2 322 867

(73) Patentinhaber : **GOETZE AG**
**Bürgermeister-Schmidt-Strasse 17**
**D-5093 Burscheid 1 (DE)**

(72) Erfinder : **Deuring, Hans**
**Im Eulenflug 29**
**D-5093 Burscheid 1 (DE)**
Erfinder : **Stüttem, Heinz**
**Dierath 50**
**D-5093 Burscheid 1 (DE)**
Erfinder : **vom Stein, Karl**
**Am Sportfeld 15**
**D-5093 Burscheid 1 (DE)**
Erfinder : **Zutz, Hans-Henning**
**Südstrasse 49**
**D-5632 Wermelskirchen 2 (DE)**

Imprimerie Jouve, 17, rue du Louvre, 75001 Paris, France

Gleitringdichtung

Die Erfindung betrifft eine Gleitringdichtung, insbesondere Pumpendichtung, mit einem Gleitring, der axial gegen einen Gegenlaufring andrückbar ist, und einem den Gegenlaufring im Einbauzustand der Dichtung statisch abdichtenden Sekundärdichtring, der im nicht eingebauten Zustand der Dichtung zum Verbinden von Gleit- und Gegenlaufring dient.

In Pumpen werden vielfach zwischen Pumpenrad und Pumpengehäuse Gleitringdichtungen eingesetzt, die die Aufgabe haben, eine nachgiebige Dichtverbindung zwischen einem stehenden Pumpengehäuse und einem sich drehenden Pumpenrad herzustellen und aufrechtzuerhalten. Hierfür verwendete Gleitringdichtungen bestehen vielfach aus einem winkelförmigen Gummigehäuse, in welchem ein Gleitring axial unter Federdruck verschiebbar ist. Als Verdrehsicherung zwischen Gleitring und Gehäuse dient mindestens ein am Innenumfang des axialen Gehäuseschenkels angeformter, axial verlaufender Gumminocken, der in eine entsprechende axiale Ausnehmung des äußeren Gleitringumfanges eingreift.

Es ist durch die DE-A-24 05 616 bekannt, das Gehäuse der Gleitringdichtung axial zu verlängern und in diese Verlängerung den Gegenlaufring einzuknüpfen, damit er bei Lagerung und Transport nicht herausfallen kann.

Weiterhin ist durch die GB-A-807 140 bekannt, die statische Abdichtung des Gegenlaufringes über den Gleitring hinaus zu verlängern, um so eine Einbaueinheit aus Gleitringdichtung plus Gegenlaufring zu schaffen. Bei den vorab angeführten Einbaueinheiten ergibt sich das Problem, daß bei der Montage der Einbaueinheit in ein Maschinengehäuse oder auf eine Welle keine Möglichkeit besteht festzustellen, ob die Dichtungseinheit exakt zentriert ist und insbesondere der Gegenlaufring seine Sollposition erreicht hat.

Es besteht weiterhin die Möglichkeit, daß zwischen der Verlängerung der statischen Abdichtung des rotierenden Gegenlaufringes und dem feststehenden Gleitring ein Gummiabrieb entsteht, der in den Dichtspalt zwischen Gleit- und Gegenlaufring gelangt und so die weitere dichtende Funktion der Gleitringdichtung stören würde.

Der Erfindung liegt nunmehr die Aufgabe zugrunde, die zuvor genannten Nachteile konstruktiv zu umgehen und eine an sich bekannte Einbaueinheit aus Gleitringdichtung und Gegenlaufring zu verbessern.

Diese Aufgabe wird erfindungsgemäß dadurch gelöst, daß der Sekundärdichtring im nicht eingebauten Zustand der Dichtung mit seinem Innen- oder Außenumfang kraft- und/oder formschlüssig sowohl mit dem Gleit- als auch mit dem Gegenlaufring verbunden ist und nach dem axialen Verschieben im Einbauzustand der Dichtung ausschließlich mit dem Gegenlaufring zusammenwirkt.

Damit ist der Vorteil verbunden, daß der Sekundärdichtring zwei Funktionen erfüllt, nämlich im nicht eingebauten Zustand der Dichtung als Verbindungsglied zwischen Gleitring und Gegenlaufring und im Einbauzustand als statische Abdichtung des Gegenlaufringes. Vorteilhaft ist zu sehen, daß der Sekundärdichtring sowohl am Innen- als auch am Außenumfang von Gleit- und Gegenlaufring angeordnet werden kann, wobei sich eine Vielzahl von Dichtungen für die unterschiedlichsten Anwendungsfälle herstellen lassen.

Ist der Sekundärdichtring an der Innenumfangsfläche von Gleit- und Gegenlaufring vorgesehen, ist es vorteilhaft, den lichten Durchmesser des Sekundärdichtringes geringfügig kleiner zu gestalten als den Wellendurchmesser.

Beim Einbau der Dichtungseinheit wird der Gegenlaufring zur Zentrierung von einem Montagewerkzeug aufgenommen. Das Gehäuse der Gleitringdichtung liegt an einem axialen Schenkel des Montagewerkzeuges an. Wird die Welle eingedrückt, greift ihre Stirnfläche an dem Sekundärdichtring an, dessen Durchmesser geringfügig kleiner ist als der Wellendurchmesser, löst die bestehende reibungs- oder formschlüssige Verbindung zwischen Sekundärdichtring und Gleitring und schiebt den Sekundärdichtring axial in den Gegenlaufring. Der Sekundärdichtring hat seine Einbaulage erreicht, wenn er von der Stirnfläche der Welle gegen einen am Montagewerkzeug angeformten Anschlag gedrückt worden ist. Ein weiteres Durchdrücken der Welle bis zu deren Endposition ist unter erhöhtem Kraftaufwand möglich, ohne daß sich dabei die jetzige Lage des Sekundärdichtringes ändert. Durch das axiale Verschieben des Sekundärdichtringes wird gleichzeitig die axiale Positionierung des Gegenlaufringes auf der Welle sichergestellt.

Vorzugsweise ist an der dem Gegenlaufring zugewandten Seite des Sekundärdichtringes ein radial nach innen weisender Anschlag angeformt, der in der Höhe der Innenumfangsfläche des Sekundärdichtringes mit einer Sollbruchstelle versehen ist. Wird die Welle eingedrückt, greift die Stirnfläche der Welle an dem Anschlag an und schiebt den Sekundärdichtring axial in seine Einbaueinlage. Ist diese erreicht, wird der Anschlag bei einem weiteren Eindrücken der Welle in der Höhe der Sollbruchstelle abgeschert.

Einem weiteren Gedanken der Erfindung gemäß ist in die innere Umfangsfläche des Gegenlaufringes mindestens eine radiale oder axiale Ausnehmung eingebracht, in der sowohl während Lagerung und Transport, als auch im Einbauzustand der Sekundärdichtring, welcher mit korrespondierenden radialen oder axialen Erhebungen versehen ist, anliegt. Die Ausnehmungen im Gegenlaufring dienen dazu, daß sich der inkompressible Sekundärdichtring, der vorzugsweise aus einem elastichen Material besteht, ausdehnen kann, wenn er durch die Welle in den Gegenlaufring eingeschoben wird. Um dieses Fließvermögen des elastischen Materials zu erhöhen, ist die Innen- und/over Außenumfangsfläche des Sekundärdichtringes in an sich bekannter Weise mit einem wellenförmigen Profil versehen.

Ein weiterer Vorzug besteht darin, daß am äußeren Umfang des Sekundärdichtringes in axialer Richtung verlaufend überströmkanäle eingearbeitet sind, die axial nur so lang sind, daß sie im nicht eingebauten Zustand der Dichtung den Auflagebereich des Gleitringes auf dem Sekundärdichtring überbrücken. Damit ist der Vorteil verbunden, daß die Dichtungseinheit im nicht eingebauten Zustand auf Dichtheit geprüft werden kann.

Vorzugsweise ist der Sekundärdichtring aus Hartgummi oder Kunststoff hergestellt und weist einen einvulkanisierten Versteifungsring auf. Dieser Versteifungsring ist mit einem radial nach innen weisenden, konisch abgeschrägten Kragen versehen, dessen Innendurchmesser etwa dem Wellendurchmesser entspricht.

Dieser Kragen übernimmt die Funktion eines Zentrierungskegels, damit bei eventuellem exzentrischen Eindrücken der Welle der Sekundärdichtring nicht verkantet und somit einen exakten Sitz unmöglich machen kann.

Ausführungsbeispiele sind in der Zeichnung dargestellt und werden im folgenden näher beschrieben. Es zeigen

Figur 1 Gleitringdichtungseinheit vor dem Einbau im Querschnitt

Figur 1a Sekundärdichtring im Querschnitt

Figur 2 Gleitringdichtung im Einbauzustand im Teilschnitt

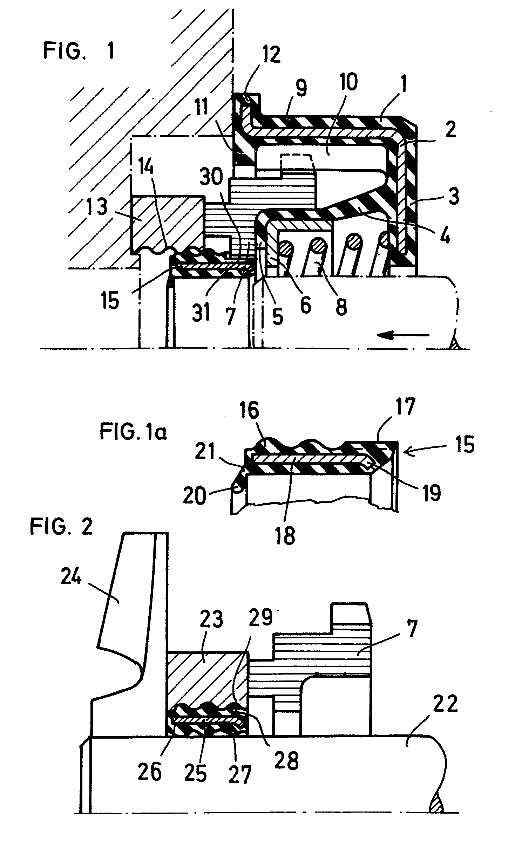

Die in Figur 1 dargestellte Gleitringdichtungseinheit besteht aus einem winkelförmigen Dichtungsgehäuse 1 aus Gummi und einem einvulkanisierten Versteifungsring 2. Der radial nach innen gerichtete Gehäuseschenkel 3 weist eine angeformte Gummimembrane 4 auf, deren freies Ende 5 mittels eines Klemmringes 6 am Gleitring 7 unter dem Druck der Feder 8 gehalten wird. Mit Hilfe eines am Innenumfang des axialen Gehäuseschenkels 9 versehenen Nockens 10, der in eine entsprechende Umfangsausnehmung des Gleitringes 7 greift, wird eine Verdrehsicherung zwischen Gleitring 7 und Gehäuse 1 erzielt. Durch einen radial nach innen weisenden elastischen Anschlag 11, der am axialen Gehäuseschenkel 9 angeformt ist, wird der Gleitring 7 vor dem Herausfallen gesichert. Der Anschlag 11 ist radial nach außen verlängert 12 und liegt an dem strichpunktiert dargestellten Montagewerkzeug an. Der Gegenlaufring 13, an dessen Innenumfang radiale Ausnehmungen 14 eingearbeitet sind, ist mit dem Gleitring 7 durch einen Sekundärdichtring 15 verbunden.

Der in Figur 1a dargestellte Sekundärdichtring 15 besitzt an seiner Außenfläche radial nach außen weisende wellenförmige Erhebungen 16. In der Sekundärdichtung 15 ist ein metallischer Versteifungsring 18 einvulkanisiert, an dessen, dem Gleitring 7 zugewandten Ende ein radial nach innen weisender, kegelig abgeschrägter Kragen 19 angeformt ist. An der Gegenlaufringseite weist der Sekundärdichtring an seinem Innenumfang einen Anschlag 20 auf, der in der Höhe des Innendurchmessers mit einer Sollbruchstelle 21 versehen ist.

Der in Figur 1a dargestellte Sekundärdichtring 15 liegt mit seinen wellenförmigen Erhebungen 16 in den korrespondierenden Ausnehmungen 14 des in Figur 1 dargestellten Gegenlaufringes 13. An der Gleitringseite liegt der Sekundärdichtring 15 mit seinem Außenumfang 17 an der Innenumfangsfläche 30 des Gleitringes 7 an und stellt so zwischen Gleitring 7 und Gegenlaufring 13 eine reibschlüssige Verbindung her. Weiterhin sind in den Sekundärdichtring 15 in axialer Richtung verlaufend überströmkanäle 31 eingearbeitet.

In Figur 2 ist eine Gleitringdichtung im eingebauten Zustand ohne Gehäuse dargestellt. Auf der Welle 22 sind ein Gleitring 7, ein Gegenlaufring 23 und ein Pumpenrad 24 angeordnet. Der Gegenlaufring 23 ist durch einen Sekundärdichtring 26 mit einem einvulkanisierten Versteifungsring 25 auf der Welle 22 befestigt. Der Sekundärdichtring 26 weist sowohl an seinem Innenumfang als auch an seinem Außenumfang einen wellenförmigen Profilquerschnitt 27, 28 auf, wobei das Profil des Außenumfanges 28 in korrespondierende Ausnehmungen 29 am Gegenlaufring 23 eingreift.

**Ansprüche**

1. Gleitringdichtung, insbesondere Pumpendichtung, mit einem Gleitring, der axial gegen einen Gegenlaufring andrückbar ist, und einem den Gegenlaufring im Einbauzustand der Dichtung statisch abdichtenden Sekundärdichtring, der im nicht eingebauten Zustand der Dichtung zum Verbinden von Gleit- und Gegenlaufring dient, dadurch gekennzeichnet, daß der Sekundärdichtring (15) im nicht eingebauten Zustand der Dichtung mit seinem Innen- oder Außenumfang kraft — und/oder formschlüssig sowohl mit dem Gleit — (7) als auch mit dem Gegenlaufring (13, 23) verbunden ist und nach dem axialen Verschieben im Einbauzustand der Dichtung ausschließlich mit dem Gegenlaufring (13, 23) zusammenwirkt.

2. Gleitringdichtung nach Anspruch 1, dadurch gekennzeichnet, daß der Sekundärdichtring (15) mit seinem Außenumfang am Innenumfang des Gleit- (7) und Gegenlaufringes (23) anliegt.

3. Gleitringdichtung nach den Ansprüchen 1 und 2, dadurch gekennzeichnet, daß der lichte Durchmesser des Sekundärdichtringes (26) kleiner ist als der Wellendurchmesser (22).

4. Gleitringdichtung nach den Ansprüchen 1 bis 3, dadurch gekennzeichnet, daß an den Sekundärdichtring (15) ein radial nach innen weisender Anschlag (20) angeformt ist.

5. Gleitringdichtung nach Anspruch 4, dadurch gekennzeichnet, daß der Anschlag (20) axial am Ende der dem Gleitring (7) abgewandten Seite angeordnet ist.

6. Gleitringdichtung nach den Ansprüchen 4 und 5, dadurch gekennzeichnet, daß der Anschlag (20) in der Höhe des Innendurchmessers des Sekundärdichtringes eine Sollbruchstelle (21) aufweist.

7. Gleitringdichtung nach den Ansprüchen 1 bis 6, dadurch gekennzeichnet, daß in den Gegenlaufring (13, 23) mindestens eine radiale und/oder eine axiale Ausnehmung eingearbeitet ist.

8. Gleitringdichtung nach den Ansprüchen 1 bis 7, dadurch gekennzeichnet, daß der Sekundärdichtring (15, 26) mindestens eine radiale und/oder mindestens eine axiale Erhöhung aufweist, die in die korrespondierende Ausnehmung am Gegenlaufring (13, 23) eingreift.

9. Gleitringdichtung nach den Ansprüchen 1 bis 8, dadurch gekennzeichnet, daß der Sekundärdichtring (15, 26) an seinem Außenumfang und/oder an seinen Innenumfang einen wellenförmigen Profilquerschnitt (16, 27, 28) aufweist.

10. Gleitringdichtung nach den Ansprüchen 1 bis 9, dadurch gekennzeichnet, daß am äußeren Umfang des Sekundärdichtringes (15) in axialer Richtung verlaufend überströmkanäle (31) eingearbeitet sind.

11. Gleitringdichtung nach den Ansprüchen 1 bis 10, dadurch gekennzeichnet, daß der Sekundärdichtring (15, 26) aus Hartgummi oder Kunststoff besteht.

12. Gleitringdichtung nach den Ansprüchen 1 bis 11, dadurch gekennzeichnet, daß in den Sekundärdichtring (15, 26) ein Versteifungsring (18, 25) einvulkanisiert ist.

13. Gleitringdichtung nach Anspruch 12, dadurch gekennzeichnet, daß der Versteifungsring (18) gleitringseitig einen radial nach innen weisenden Kragen (19) aufweist.

14. Gleitringdichtung nach Anspruch 13, dadurch gekennzeichnet, daß der Innendurchmesser des Kragens (19) etwa dem Wellendurchmesser entspricht.

15. Gleitringdichtung nach den Ansprüchen 13 und 14, dadurch gekennzeichnet, daß der Kragen (19) eine konische Abschrägung zur Welle hin aufweist.

## Claims

1. A mechanical face seal unit, and specifically a pump seal with a sliding ring, which can be pressed axially against a counter ring, and a secondary sealing ring forming a static seal against the counter ring when the seal is installed, which serves to connect the sliding ring and the counter ring, whereby the secondary sealing ring (15), before installation, is connected by its inner or outer circumference, through friction and/or positively, not only with the sliding ring (7), but also with the counter ring (13, 23) and, following the axial deplacement of the ring when installed, then operates in conjunction with the counter ring (13, 23).

2. A mechanical face seal unit in accordance with Claim 1, whereby the secondary ring (15) is located with its outer circumference on the inner circumference of the sliding ring (7) and the counter ring (23).

3. A mechanical face seal unit in accordance with Claims 1 and 2, whereby the inside diameter of the secondary sealing ring (26) is smaller than the shaft diameter (22).

4. A mechanical face seal unit in accordance with Claims 1 to 3, whereby a radial, inner recess (20) is molded into the secondary sealing ring (15).

5. A mechanical face seal unit in accordance with Claim 4, whereby the recess (20) is situated axially at the end of the side away from the sliding ring (7).

6. A mechanical face seal unit in accordance with Claims 4 and 5, whereby the recess (20) indicates a predetermined breaking point (21) in the width of the inner diameter of the secondary sealing ring.

7. A mechanical face seal unit in accordance with Claims 1 to 6, whereby there is at least one radial and/or one axial recess machined in the counter ring (13, 23).

8. A mechanical face seal unit in accordance with Claims 1 to 7, whereby the secondary sealing ring (15, 26) displays at least one radial and/or at least one axial ridge which fits into a corresponding recess on the counter ring (13, 23).

9. A mechanical face seal unit in accordance with Claims 1 to 8, whereby the secondary ring (15, 26) displays a wave-like profile cross-section (16, 27, 28) on its outer and/or inner circumference.

10. A mechanical face seal unit in accordance with Claims 1 to 9, whereby overflow channels (31), running axially, have been machined into the outer circumference of the secondary sealing ring (15).

11. A mechanical face seal unit in accordance with Claims 1 to 10, whereby the secondary sealing ring (15, 26) consists of hard rubber or plastic.

12. A mechanical face seal unit in accordance with Claims 1 to 11, whereby there is a reinforcing ring (18, 25) vulcanized into the secondary sealing ring (15, 26).

13. A mechanical face seal unit in accordance with Claim 12, whereby the reinforcing ring (18) has a radial, inwardly-directed collar (19) on the sliding ring side.

14. A mechanical face seal unit in accordance with Claim 13, whereby the inner diameter of the collar (19) corresponds closely to the diameter of the shaft.

15. A mechanical face seal unit in accordance with Claims 13 and 14, whereby the collar (19) displays a conical taper towards the shaft.

## Revendications

1. Joint d'étanchéité à bague de glissement, en particulier pour pompe, comportant une bague de glissement pouvant s'appuyer axialement contre une bague de rotation antagoniste, et une bague d'étanchéité secondaire assurant, dans le joint monté, l'étanchéité statique de la bague de rotation antagoniste et servant, dans le joint non monté, à relier la bague de glissement à la bague de rotation antagoniste, caractérisé en ce que la bague d'étanchéité secondaire (15), lorsque le joint est monté, est reliée dynamiquement et/ou somatiquement, par sa périphérie interne ou externe, tant à la bague de glissement (7) qu'à la bague de rotation antagoniste (13, 23), et qu'après déplacement axial, lorsque le joint est monté, elle coopère exclusivement avec la bague de rotation antagoniste (13, 23).

2. Joint d'étanchéité à bague de glissement selon la Revendication 1, caractérisé en ce que la bague d'étanchéité secondaire (15) s'appuie, par sa périphérie externe, à la périphérie interne de la bague de glissement (7) et de la bague de rotation antagoniste (23).

3. Joint d'étanchéité à bague de glissement selon les Revendications 1 et 2, caractérisé en ce que le diamètre intérieur de la bague d'étanchéité secondaire (26) est plus petit que le diamètre de l'arbre (22).

4. Joint d'étanchéité à bague de glissement selon les Revendications 1 à 3, caractérisé en ce qu'une butée (20) dirigée radialement vers l'intérieur est formée sur la bague d'étanchéité secondaire (15).

5. Joint d'étanchéité à bague de glissement selon la Revendication 4, caractérisé en ce que la butée (20) est disposée axialement à l'extrémité du côté opposé à la bague de glissement (7).

6. Joint d'étanchéité à bague de glissement selon les Revendications 4 et 5, caractérisé en ce que la butée (20) comporte une zone d'amorce de rupture (21) à la hauteur du diamètre intérieur de la bague d'étanchéité secondaire.

7. Joint d'étanchéité à bague de glissement selon les Revendications 1 à 6, caractérisé en ce qu'au moins un évidement radial et/ou axial est creusé dans la bague de rotation antagoniste (13, 23).

8. Joint d'étanchéité à bague de glissement selon les Revendications 1 à 7, caractérisé en ce que la bague d'étanchéité secondaire (15, 26) comporte au moins une protubérance axiale et/ou au moins une protubérance radiale s'engageant dans l'évidement correspondant de la bague de rotations antagoniste (13, 23).

9. Joint d'étanchéité à bague de glissement selon les Revendications 1 à 8, caractérisé en ce que la bague d'étanchéité secondaire (15, 26) présente, en coupe, un profil ondulé (16, 27, 28) à sa périphérie externe et/ou interne.

10. Joint d'étanchéité à bague de glissement selon les Revendications 1 à 9, caractérisé en ce que des canaux de débordement (31), orientés axialement, sont creusés dans la périphérie externe de la bague d'étanchéité secondaire (15).

11. Joint d'étanchéité à bague de glissement selon les Revendications 1 à 10, caractérisé en ce que la bague d'étanchéité secondaire (15, 26) est faite d'ébonite ou de matière synthétique.

12. Joint d'étanchéité à bague de glissement selon les Revendications 1 à 11, caractérisé en ce qu'une bague de renforcement (18, 25) est incorporée, par vulcanisation, dans la bague d'étanchéité secondaire (15, 26).

13. Joint d'étanchéité à bague de glissement selon la Revendication 12, caractérisé en ce que la bague de renforcement (18) comporte, du côté de la bague de glissement, un col (19) dirigé radialement vers l'intérieur.

14. Joint d'étanchéité à bague de glissement selon la Revendication 13, caractérisé en ce que le diamètre intérieur du col (19) correspond approximativement au diamètre de l'arbre (22).

15. Joint d'étanchéité à bague de glissement selon les Revendications 13 et 14, caractérisé en ce que le col (19) comporte un chanfrein conique dirigé vers l'arbre (22).

1/1

FIG. 1

FIG. 1a

FIG. 2